# EUROPEAN PATENT SPECIFICATION

(11) **EP 4 195 720 B1**
(45) Date of publication and mention of the grant of the patent: **01.05.2024**
(21) Application number: 21213250.0
(22) Date of filing: 08.12.2021
(51) Int. Cl.: H04W 4/80, H04L 12/28, G07C 9/00, G07C 9/28, H04W 4/021, H04W 52/02

(54) **HOME NETWORK**
HEIMNETZWERK
RÉSEAU DOMESTIQUE

(43) Date of publication of application: 14.06.2023
(73) Proprietor: Climax Technology Co., Ltd., Taipei 114 (TW)
(72) Inventor: CHEN, Yi-Kai, 10850 Taipei City (TW)
(74) Representative: Karakatsanis, Georgios

(56) References cited:
- EP-A1- 3 001 715
- WO-A1-2020/159755
- US-A1- 2017 311 271
- US-A1- 2019 363 901

## Description

### BACKGROUND OF THE INVENTION

### 1. FIELD OF THE INVENTION

The present invention generally relates to a home network, and more particularly to a home network adopting Bluetooth low energy (BLE) protocol.

### 2. DESCRIPTION OF RELATED ART

A smart home network or home automation system may connect a variety of home electronic systems such as lighting, temperature control, entertainment, security and alarm systems, and may be used to improve quality of life, increase personal productivity, enhance home security and promote convenience of entertainment. The smart home network commonly adopts wireless technology such as Wi-Fi, Bluetooth or Zigbee, among which Wi-Fi has higher transmission rate and longer transmission distance, Bluetooth has higher security, and ZigBee has lower power consumption.

Bluetooth low energy (BLE) is a wireless personal area network protocol, which is distinct from classic Bluetooth protocol and uses communication technology substantially different from classic Bluetooth protocol. However, these two protocols may coexist in one device, for example, a dual-mode device. Compared to classic Bluetooth, BLE provides considerably low power consumption and cost, while maintains similar communication distance and uses the same radio frequency range. Due to low power consumption, a BLE device is ordinarily battery-powered, for example, powered by a button cell (or button battery).

According to BLE protocol, two BLE devices may exchange information to execute pairing by broadcasting advertising packets. One of the BLE devices transmits the advertising packets, and the other of the BLE devices listens to the advertising packets transmitted from the opposite BLE device. According to BLE protocol, transmission of the advertising packets repeatedly proceeds without stop. Therefore, in the long run, the transmission of the advertising packets occupies a substantive portion of overall power consumption. US 2019/363901 A1 discloses a management system including a management host device and at least one mobile device, and the management host device executes a management method. The management host device executes a normal mode, a temporary mode, and an unmanned mode. In the normal mode, the management host device broadcasts a first connection signal. In the temporary mode, the management host device broadcasts a second connection signal. WO 2020/159755 A1 discloses a tracking system that provides configuration instructions to an electronic device based on user presence. The tracking system can determine a user's location relative to a geographic boundary surrounding a geographic area associated with the user. Depending on the user's location, the tracking system may send instructions to configure an electronic device to send a notification or change the operating mode of the electronic device in response to the user's presence. EP 3001715 A1 discloses a mobile device and method for remote control thereof. According to authentication by an external authentication system, a mobile device appropriately controls a start or a stop of a function of automatically sending a signal using wireless communication and a content of the signal. US 2017/311271 A1 discloses a wireless access point managing apparatus that performs a determination as to whether shutdown of the wireless access point of the separate apparatus is appropriate, and sending a shutdown instruction to the separate apparatus if shutdown is determined to be appropriate.

A need has thus arisen to propose a novel scheme for further improving power consumption of the smart home network adopting BLE protocol.

### SUMMARY OF THE INVENTION

In view of the foregoing, it is an object of the embodiment of the present invention to provide a home network capable of substantially reducing power consumption of a Bluetooth low energy (BLE) device, thereby effectively increasing battery lifetime.

According to one embodiment, a home network includes a gateway and a wireless Bluetooth low energy (BLE) device. The wireless BLE device is controlled by the gateway, and adopts Bluetooth low energy protocol. When a user is at home, the gateway notifies the wireless BLE device to stop emitting an advertising signal; when the user is not at home, the gateway notifies the wireless BLE device to start emitting the advertising signal.

### BRIEF DESCRIPTION OF THE DRAWINGS

FIG. 1 shows a system block diagram illustrating a home network according to one embodiment of the present invention;
FIG. 2 shows a flow diagram illustrating a method of reducing power consumption in a home network according to a first embodiment of the present invention;
FIG. 3 shows a flow diagram illustrating a method of reducing power consumption in a home network according to a second embodiment of the present invention;
FIG. 4 shows a flow diagram illustrating a method of reducing power consumption in a home network according to a third embodiment of the present invention; and
FIG. 5 shows a flow diagram illustrating a method of reducing power consumption in a home network according to a fourth embodiment of the present invention.

### DETAILED DESCRIPTION OF THE INVENTION

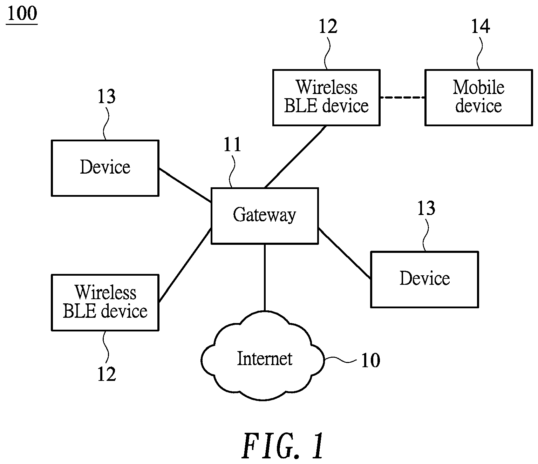

FIG. 1 shows a system block diagram illustrating a home network 100 according to one embodiment of the present invention. Home network is commonly called smart home network, which is one type of local area network.

The home network 100 may include a gateway 11 configured to connect to another network (usually a higher-level network such as wide area network or the Internet 10) adopting a different communication protocol.

According to one aspect of the embodiment, the home network 100 may include at least one wireless Bluetooth low energy (BLE) device 12, which is controlled by the gateway 11 in a wireless manner. The wireless BLE device 12 adopts Bluetooth low energy (BLE) protocol with advantage of low power consumption, and is ordinarily battery-powered, for example, by a button cell (or button battery). In one embodiment, the wireless BLE device 12 may be a wireless security interface device such as a wireless door lock or wireless keypad.

The home network 100 may also include some (non-BLE) devices 13, such as sensors, home appliances, security devices or alarms, which are controlled by the gateway 11 in wireless or wired manner.

In the embodiment, the home network 100 centrally controlled by the gateway 11 may be in one of the following three modes: home arm (or home) mode, away mode and disarm mode. Specifically, the away mode indicates that a user is not at home, and other modes indicate that the user is at home. When being in the home arm mode, some pre-selected sensors are armed or activated; when being in the away mode, all sensors are activated; and when being in the disarm mode, all sensors are disarmed. In another embodiment, the home network 100 may have modes that are different in type and quantity from the present embodiment. However, at least one mode indicates that the user is not at home, while other modes indicate that the user is at home.

According to BLE protocol, the wireless BLE device 12 emits an advertising signal (or packet) that facilitates pairing with a mobile device 14 (such as mobile phone) with BLE function. When pairing succeeds, the mobile device 14 may then control the wireless BLE device 12, for example, open a door lock.

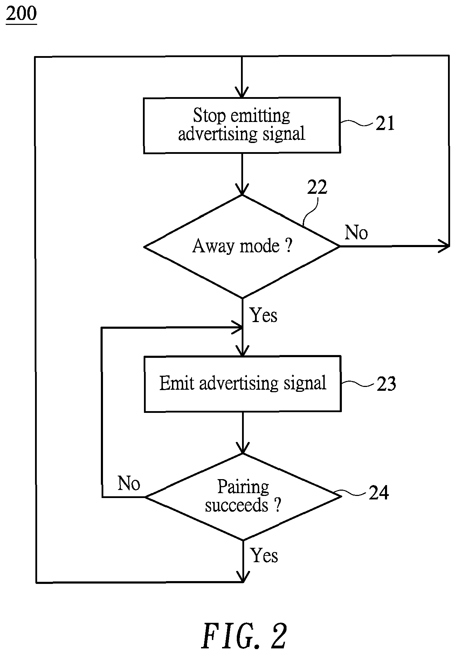

FIG. 2 shows a flow diagram illustrating a method 200 of reducing power consumption in a home network according to a first embodiment of the present invention, which may be adapted to the home network 100 of FIG. 1. Specifically, in step 21, the gateway 11 notifies the wireless BLE device 12 to stop emitting the advertising signal. Next, in step 22, the gateway 11 determines a current mode of the home network 100. If the current mode is not the away mode, indicating that the user is at home, the flow goes back to step 21 and continuously stops emitting the advertising signal. Therefore, the wireless BLE device 12 may substantially reduce power consumption, thereby effectively increasing battery lifetime.

In step 22, if the home network 100 is in the away mode, indicating that the user is not at home, the flow goes to step 23 and the gateway 11 notifies the wireless BLE device 12 to start emitting the advertising signal. If no mobile device 14 executes pairing with the wireless BLE device 12 (step 24), the flow goes back to step 23 and the wireless BLE device 12 continuously emits the advertising signal. If paring between the mobile device 14 and the wireless BLE device 12 succeeds (step 24), the gateway 11 relieves the away mode and the flow goes back to step 21, and the gateway 11 notifies the wireless BLE device 12 to stop emitting the advertising signal.

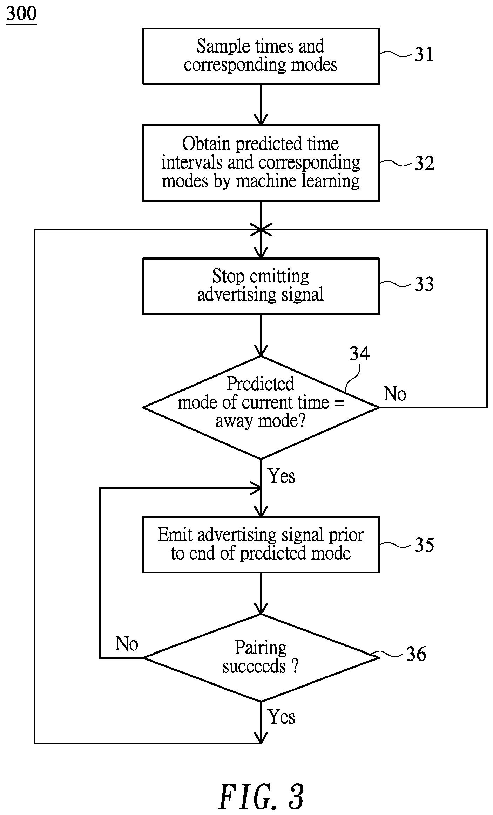

FIG. 3 shows a flow diagram illustrating a method 300 of reducing power consumption in a home network according to a second embodiment of the present invention, which may be adapted to the home network 100 of FIG. 1. Specifically, in step 31, the gateway 11 obtains sample data by sampling a plurality of times and corresponding modes from history records. Next, in step 32, the gateway 11 obtains prediction data composed of predicted time intervals and corresponding modes by applying machine learning technique (of artificial intelligence) performed on the sample data as training data.

In step 33, the gateway 11 notifies the wireless BLE device 12 to stop emitting the advertising signal. Next, in step 34, the gateway 11 determines a predicted mode of current time according to the prediction data. If the predicted mode is not the away mode, indicating that the user is at home, the flow goes back to step 33 and continuously stops emitting the advertising signal. Therefore, the wireless BLE device 12 may substantially reduce power consumption, thereby effectively increasing battery lifetime.

In step 34, if the predicted mode is the away mode, indicating that the user is not at home, the flow goes to step 35 and the gateway 11 notifies the wireless BLE device 12 to start emitting the advertising signal prior to an end of the predicted time interval of the away mode, for example, a few minutes before the end of the predicted time interval. If no mobile device 14 executes pairing with the wireless BLE device 12 (step 36), the flow goes back to step 35 and the wireless BLE device 12 continuously emits the advertising signal. If paring between the mobile device 14 and the wireless BLE device 12 succeeds (step 36), the gateway 11 relieves the away mode and the flow goes back to step 33, and the gateway 11 notifies the wireless BLE device 12 to stop emitting the advertising signal.

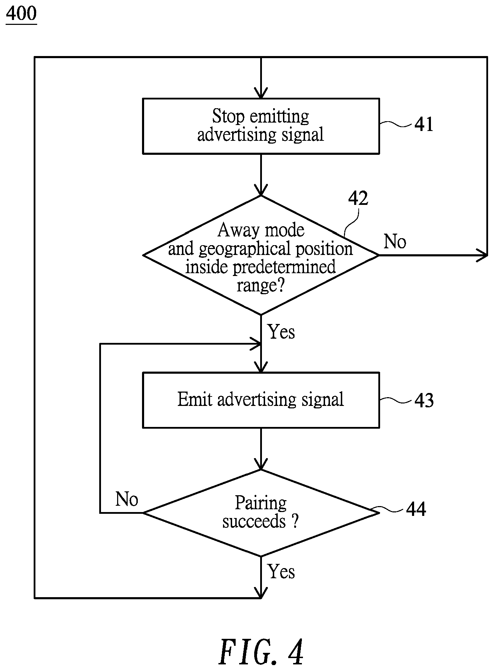

FIG. 4 shows a flow diagram illustrating a method 400 of reducing power consumption in a home network according to a third embodiment of the present invention, which may be adapted to the home network 100 of FIG. 1. Specifically, in step 41, the gateway 11 notifies the wireless BLE device 12 to stop emitting the advertising signal. Next, in step 42, the gateway 11 obtains geographical position of the mobile device 14 (such as mobile phone) of the user via location-based service (LBS). If the home network 100 is in the away mode and the geographical position is inside a predetermined range, indicating that the user is about entering the home, the flow goes to step 43 and the gateway 11 notifies the wireless BLE device 12 to start emitting the advertising signal. If no mobile device 14 executes pairing with the wireless BLE device 12 (step 44), the flow goes back to step 43 and the wireless BLE device 12 continuously emits the advertising signal. If paring between the mobile device 14 and the wireless BLE device 12 succeeds (step 44), the gateway 11 relieves the away mode and the flow goes back to step 41, and the gateway 11 notifies the wireless BLE device 12 to stop emitting the advertising signal.

In step 42, if the home network 100 is not in the away mode or the geographical position is not inside the predetermined range, the flow goes back to step 41 and continuously stops emitting the advertising signal. Therefore, the wireless BLE device 12 may substantially reduce power consumption, thereby effectively increasing battery lifetime.

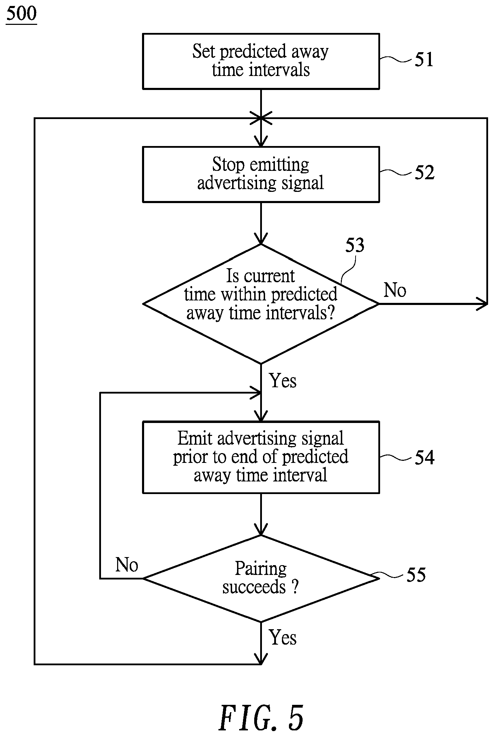

FIG. 5 shows a flow diagram illustrating a method 500 of reducing power consumption in a home network according to a fourth embodiment of the present invention, which may be adapted to the home network 100 of FIG. 1. Specifically, in step 51, the gateway 11 receives predicted away time intervals (during which the user may probably not be at home) and predicted home time intervals (during which the user may probably be at home) set by the user.

In step 52, the gateway 11 notifies the wireless BLE device 12 to stop emitting the advertising signal. Next, in step 53, the gateway 11 determines whether current time is within the predicted away time intervals. If current time is not within the predicted away time intervals, indicating that the user is at home, the flow goes back to step 51 and continuously stops emitting the advertising signal. Therefore, the wireless BLE device 12 may substantially reduce power consumption, thereby effectively increasing battery lifetime.

In step 53, if current time is within the predicted away time interval, indicating that the user is not at home, the flow goes to step 54 and the gateway 11 notifies the wireless BLE device 12 to start emitting the advertising signal prior to an end of the predicted away time interval, for example, a few minutes before the end of the predicted away time interval. If no mobile device 14 executes pairing with the wireless BLE device 12 (step 55), the flow goes back to step 54 and the wireless BLE device 12 continuously emits the advertising signal. If paring between the mobile device 14 and the wireless BLE device 12 succeeds (step 55), the gateway 11 relieves the away mode and the flow goes back to step 52, and the gateway 11 notifies the wireless BLE device 12 to stop emitting the advertising signal.

## Claims

1. A home network (100), comprising:
a gateway (11); and
a wireless Bluetooth low energy, BLE, device (12) controlled by the gateway, the wireless BLE device adopting Bluetooth low energy protocol;
**characterized in that** when a user of a mobile device is at home, the gateway notifies the wireless BLE device to stop broadcasting an advertising signal used to facilitate pairing of the wireless BLE device with the mobile device;
when the user is not at home, the gateway notifies the wireless BLE device to start broadcasting the advertising signal.

2. The home network of claim 1, wherein the home network is in one of a plurality of modes, which include away mode and other mode, wherein the away mode indicates that the user is not at home, while said other mode indicates that the user is at home.

3. The home network of claim 2, wherein the gateway performs the following steps:
notifying the wireless BLE device to stop broadcasting the advertising signal (21); and
when a current mode is the away mode, notifying the wireless BLE device to start broadcasting the advertising signal (23).

4. The home network of claim 3, wherein when the current mode is the away mode and paring between a mobile device of the user and the wireless BLE device succeeds, the gateway notifies the wireless BLE device to stop broadcasting the advertising signal (21).

5. The home network of claim 2, wherein the gateway performs the following steps:
obtaining sample data by sampling a plurality of times and corresponding modes from history records (31);
obtaining prediction data composed of predicted time intervals and corresponding modes by applying machine learning performed on the sample data as training data (32);
notifying the wireless BLE device to stop broadcasting the advertising signal (33); and
when the predicted mode is the away mode, notifying the wireless BLE device to start broadcasting the advertising signal prior to an end of the predicted time interval of the away mode (35).

6. The home network of claim 5, wherein when the predicted mode is the away mode and paring between a mobile device of the user and the wireless BLE device succeeds, the gateway notifies the wireless BLE device to stop broadcasting the advertising signal (33).

7. The home network of claim 2, wherein the gateway performs the following steps:
notifying the wireless BLE device to stop broadcasting the advertising signal (41); and
when a current mode is the away mode and geographical position of a mobile device of the user is inside a predetermined range, notifying the wireless BLE device to start broadcasting the advertising signal (43).

8. The home network of claim 7, wherein when the current mode is not the away mode or the geographical position is not inside the predetermined range, the wireless BLE device continuously stops broadcasting the advertising signal (41).

9. The home network of claim 7, wherein when the current mode is the away mode and the geographical position of the mobile device of the user is inside the predetermined range and paring between the mobile device of the user and the wireless BLE device succeeds, the gateway notifies the wireless BLE device to stop broadcasting the advertising signal (41).

10. The home network of claim 1, wherein the gateway performs the following steps:
receiving predicted away time intervals and predicted home time intervals set by the user (51); and
when current time is within the predicted away time interval, the gateway notifies the wireless BLE device to start broadcasting the advertising signal prior to an end of the predicted away time interval (54).

11. The home network of claim 10, wherein when the current time is within the predicted away time interval and paring between a mobile device of the user and the wireless BLE device succeeds, the gateway notifies the wireless BLE device to stop broadcasting the advertising signal (52).

12. The home network of claim 1, wherein the wireless BLE device comprises a wireless security interface device.

13. The home network of claim 12, wherein the wireless security interface device comprises a wireless door lock or wireless keypad.

14. The home network of claim 1, wherein the wireless BLE device is powered by a battery.

15. The home network of claim 14, wherein the battery comprises a button cell.

## Patentansprüche

1. Heimnetzwerk (100), das Folgendes umfasst:
ein Gateway (11) und
ein drahtloses Bluetooth-Low-Energy- , BLE-, Gerät (12), das durch das Gateway gesteuert wird, wobei das drahtlose BLE-Gerät das Bluetooth-Low-Energy-Protokoll anwendet,
**dadurch gekennzeichnet, dass**, wenn sich ein Benutzer eines mobilen Geräts zu Hause befindet, das Gateway das drahtlose BLE-Gerät benachrichtigt, das Rundsenden eines Bekanntmachungssignals anzuhalten, das verwendet wird, um ein Koppeln des drahtlosen BLE-Geräts mit dem mobilen Gerät zu erleichtern,
wenn sich der Benutzer nicht zu Hause befindet, das Gateway das drahtlose BLE-Gerät benachrichtigt, das Rundsenden des Bekanntmachungssignals zu beginnen.

2. Heimnetzwerk nach Anspruch 1, wobei sich das Heimnetzwerk in einem von einer Vielzahl von Modi befindet, die einen Auswärtsmodus und einen anderen Modus einschließt, wobei der Auswärtsmodus anzeigt, dass sich der Benutzer nicht zu Hause befindet, während der andere Modus anzeigt, dass sich der Benutzer zu Hause befindet.

3. Heimnetzwerk nach Anspruch 2, wobei das Gateway die folgenden Schritte durchführt:
Benachrichtigen des drahtlosen BLE-Geräts, das Rundsenden des Bekanntmachungssignals anzuhalten (21), und,
wenn ein gegenwärtiger Modus der Auswärtsmodus ist, Benachrichtigen des drahtlosen BLE-Geräts, das Rundsenden des Bekanntmachungssignals zu beginnen (23).

4. Heimnetzwerk nach Anspruch 3, wobei, wenn der gegenwärtige Modus der Auswärtsmodus ist und das Koppeln zwischen einem mobilen Gerät des Benutzers und dem drahtlosen BLE-Gerät gelingt, das Gateway das drahtlose BLE-Gerät benachrichtigt, das Rundsenden des Bekanntmachungssignals anzuhalten (21).

5. Heimnetzwerk nach Anspruch 2, wobei das Gateway die folgenden Schritte durchführt:
Gewinnen von Stichprobendaten durch Abfragen einer Vielzahl von Zeiten und entsprechenden Modi aus Verlaufsaufzeichnungen (31),
Gewinnen von Vorhersagedaten, die aus vorhergesagten Zeitspannen und entsprechenden Modi bestehen, durch Anwenden von maschinellem Lernen, das an den Stichprobendaten als Trainingsdaten durchgeführt wird (32),
Benachrichtigen des drahtlosen BLE-Geräts, das Rundsenden des Bekanntmachungssignals anzuhalten (33), und,
wenn der vorhergesagte Modus der Auswärtsmodus ist, Benachrichtigen des drahtlosen BLE-Geräts, das Rundsenden des Bekanntmachungssignals vor einem Ende der vorhergesagten Zeitspanne des Auswärtsmodus anzuhalten (35).

6. Heimnetzwerk nach Anspruch 5, wobei, wenn der gegenwärtige Modus der Auswärtsmodus ist und das Koppeln zwischen einem mobilen Gerät des Benutzers und dem drahtlosen BLE-Gerät gelingt, das Gateway das drahtlose BLE-Gerät benachrichtigt, das Rundsenden des Bekanntmachungssignals anzuhalten (33).

7. Heimnetzwerk nach Anspruch 2, wobei das Gateway die folgenden Schritte durchführt:
Benachrichtigen des drahtlosen BLE-Geräts, das Rundsenden des Bekanntmachungssignals anzuhalten (41), und,
wenn ein gegenwärtiger Modus der Auswärtsmodus ist und eine geographische Position eines mobilen Geräts des Benutzers innerhalb einer vorbestimmten Reichweite liegt, Benachrichtigen des drahtlosen BLE-Geräts, das Rundsenden des Bekanntmachungssignals zu beginnen (43).

8. Heimnetzwerk nach Anspruch 7, wobei, wenn der gegenwärtige Modus nicht der Auswärtsmodus ist oder die geographische Position nicht innerhalb der vorbestimmten Reichweite liegt, das drahtlose BLE-Gerät fortdauernd das Rundsenden des Bekanntmachungssignals anhält (41).

9. Heimnetzwerk nach Anspruch 7, wobei, wenn der gegenwärtige Modus der Auswärtsmodus ist und die geographische Position innerhalb der vorbestimmten Reichweite liegt und das Koppeln zwischen einem mobilen Gerät des Benutzers und dem drahtlosen BLE-Gerät gelingt, das Gateway das drahtlose BLE-Gerät benachrichtigt, das Rundsenden des Bekanntmachungssignals anzuhalten (41).

10. Heimnetzwerk nach Anspruch 1, wobei das Gateway die folgenden Schritte durchführt:
Empfangen von vorhergesagten Auswärtszeitspannen und vorhergesagten Heimzeitspannen, die durch den Benutzer festgesetzt werden (51), und,
wenn die gegenwärtige Zeit innerhalb der vorhergesagten Auswärtszeitspanne liegt, benachrichtigt das Gateway das drahtlose BLE-Gerät, das Rundsenden des Bekanntmachungssignals vor einem Ende der vorhergesagten Auswärtszeitspanne zu beginnen (54).

11. Heimnetzwerk nach Anspruch 10, wobei, wenn die gegenwärtige Zeitspanne innerhalb der vorhergesagten Auswärtszeitspanne liegt und das Koppeln zwischen einem mobilen Gerät des Benutzers und dem drahtlosen BLE-Gerät gelingt, das Gateway das drahtlose BLE-Gerät benachrichtigt, das Rundsenden des Bekanntmachungssignals anzuhalten (52).

12. Heimnetzwerk nach Anspruch 1, wobei das drahtlose BLE-Gerät ein drahtloses Sicherheitsschnittstellengerät umfasst.

13. Heimnetzwerk nach Anspruch 12, wobei das drahtlose Sicherheitsschnittstellengerät ein drahtloses Türschloss oder ein drahtloses Tastenfeld umfasst.

14. Heimnetzwerk nach Anspruch 1, wobei das drahtlose BLE-Gerät durch eine Batterie gespeist wird.

15. Heimnetzwerk nach Anspruch 14, wobei die Batterie eine Knopfzelle umfasst.

## Revendications

1. Réseau domestique (100), comprenant :
une passerelle (11) ; et
un dispositif à basse énergie Bluetooth sans fil (12) commandé par la passerelle, le dispositif BLE sans fil adoptant un protocole à basse énergie Bluetooth ;
**caractérisé en ce que**, si un utilisateur d'un dispositif mobile est à domicile, la passerelle notifie au dispositif BLE sans fil de stopper la diffusion d'un signal d'annonce utilisées pour faciliter l'appariement du dispositif BLE sans fil avec un dispositif mobile ;
si l'utilisateur n'est pas à domicile, la passerelle notifie au dispositif BLE sans fil de démarrer la diffusion du signal d'annonce.

2. Réseau domestique selon la revendication 1, dans lequel le réseau domestique est dans l'un de la pluralité de modes, qui inclut un mode absence et un autre mode, le mode absence indiquant que l'utilisateur n'est pas à domicile, tandis que l'autre mode indique que l'utilisateur est à domicile.

3. Réseau domestique selon la revendication 2, dans lequel la passerelle réalise les étapes suivantes :
notification au dispositif BLE sans fil de stopper la diffusion du signal d'annonce (21) ; et
lorsqu'un mode actuel est le mode absence, notification au dispositif BLE sans fil de démarrer la diffusion du signal d'annonce (23).

4. Réseau domestique selon la revendication 3, dans lequel, si le mode actuel est le mode absence et si l'appariement entre un dispositif mobile de l'utilisateur et le dispositif BLE sans fil réussit, la passerelle notifie au dispositif BLE sans fil de stopper la diffusion du signal d'annonce (21).

5. Réseau domestique selon la revendication 2, dans lequel la passerelle réalise les étapes suivantes :
obtention de données d'échantillonnage en échantillonnant une pluralité de fois et de modes correspondants à partir d'enregistrements historiques (31) ;
obtention de données de prédiction composées d'intervalles temporels prédits et de modes correspondants en appliquant un apprentissage automatique réalisé sur les données d'échantillonnage comme données d'entraînement (32) ;
notification au dispositif BLE sans fil de stopper la diffusion du signal d'annonce (33) ; et
si un mode actuel est le mode absence, notification au dispositif BLE sans fil de démarrer la diffusion du signal d'annonce avant la fin de l'intervalle temporel prédit du mode absence (35).

6. Réseau domestique selon la revendication 5, dans lequel, si le mode prédit est le mode absence et si l'appariement entre un dispositif mobile de l'utilisateur et le dispositif BLE sans fil réussit, la passerelle notifie au dispositif BLE sans fil de stopper la diffusion du signal d'annonce (33).

7. Réseau domestique selon la revendication 2, dans lequel la passerelle réalise les étapes suivantes :
notification au dispositif BLE sans fil de stopper la diffusion du signal d'annonce (41) ; et
si un mode actuel est le mode absence et si la position géographique d'un dispositif mobile de l'utilisateur est à l'intérieur d'une plage prédéterminée, notification au dispositif BLE sans fil de démarrer la diffusion du signal d'annonce (43).

8. Réseau domestique selon la revendication 7, dans lequel, si un mode actuel n'est pas le mode absence ou si la position géographique n'est pas à l'intérieur de la plage prédéterminée, le dispositif BLE sans fil stoppe de manière permanente la diffusion du signal d'annonce (41).

9. Réseau domestique selon la revendication 7, dans lequel, si un mode actuel est le mode absence ou si la position géographique du dispositif mobile de l'utilisateur est à l'intérieur de la plage prédéterminée et si l'appariement entre le dispositif mobile de l'utilisateur et le dispositif BLE sans fil réussit, la passerelle notifie au dispositif BLE sans fil de stopper la diffusion du signal d'annonce (41).

10. Réseau domestique selon la revendication 1, dans lequel la passerelle réalise les étapes suivantes :
réception d'intervalles temporels d'absence prédits et d'intervalles temporels de présence à domicile prédits 34 ans par l'utilisateur (51) ; et
si l'heure actuelle se situe dans l'intervalle temporel d'absence prédit, la passerelle notifie au dispositif BLE sans fil de démarrer la diffusion du signal d'annonce avant la fin de l'intervalle temporel d'absence prédit (54).

11. Réseau domestique selon la revendication 10, dans lequel, si l'heure actuelle se situe dans l'intervalle temporel d'absence prédit et si l'appariement entre un dispositif mobile de l'utilisateur et le dispositif BLE sans fil réussit, la passerelle notifie au dispositif BLE sans fil de stopper la diffusion du signal d'annonce (52) .

12. Réseau domestique selon la revendication 1, dans lequel le dispositif BLE sans fil comprend un dispositif d'interface de sécurité sans fil.

13. Réseau domestique selon la revendication 12, dans lequel le dispositif d'interface de sécurité sans fil comprend une serrure de porte sans fil ou un pavé numérique sans fil.

14. Réseau domestique selon la revendication 1, dans lequel le dispositif BLE sans fil est alimenté par une batterie.

15. Réseau domestique selon la revendication 14, dans lequel la batterie comprend une pile bouton.
